Europäisches Patentamt

European Patent Office

Office européen des brevets

(11) Publication number: 0 286 714 B1

# EUROPEAN PATENT SPECIFICATION

(45) Date of publication of patent specification: 28.04.93    (51) Int. Cl.⁵: **B01D 61/42**, B01D 35/06, C02F 11/12

(21) Application number: 87112336.0

(22) Date of filing: 25.08.87

(54) **Electroosmotic dewaterer.**

(30) Priority: 13.04.87 JP 90029/87
13.04.87 JP 90030/87

(43) Date of publication of application:
**19.10.88 Bulletin 88/42**

(45) Publication of the grant of the patent:
**28.04.93 Bulletin 93/17**

(84) Designated Contracting States:
**DE FR GB**

(56) References cited:
**CH-A- 600 932**
**US-A- 4 101 400**

**PATENT ABSTRACTS OF JAPAN, vol. 5, no. 124 (C-66)[796], 11th August 1981; & JP - A - 56 62503 (KURITA KOGYO K.K.) 28-05-1981**

**PATENT ABSTRACTS OF JAPAN, vol. 5, no. 124 (C-66)[796], 11th August 1981; & JP - A - 56 60604 (KURITA KOGYO K.K.) 25-05-1981**

(73) Proprietor: **FUJI ELECTRIC CO., LTD.**
**1-1, Tanabeshinden Kawasaki-ku**
**Kawasaki-shi Kanagawa 210(JP)**

(72) Inventor: **Yamaguchi, Mikimasa**
**Fuji Electric Co., Ltd No.1-1, Tanabeshinden**
**Kawasaki-ku Kawasaki-shi(JP)**
Inventor: **Nakagawa, Michio**
**Fuji Electric Co., Ltd No.1-1, Tanabeshinden**
**Kawasaki-ku Kawasaki-shi(JP)**
Inventor: **Ohanamori, Hideyuki**
**Fuji Electric Co., Ltd No.1-1, Tanabeshinden**
**Kawasaki-ku Kawasaki-shi(JP)**
Inventor: **Yoshida, Masayuku**
**Fuji Electric Co., Ltd No.1-1, Tanabeshinden**
**Kawasaki-ku Kawasaki-shi(JP)**
Inventor: **Matsushita, Hiroshi**
**Fuji Electric Co., Ltd No.1-1, Tanabeshinden**
**Kawasaki-ku Kawasaki-shi(JP)**

(74) Representative: **Patentanwälte Grünecker,**
**Kinkeldey, Stockmair & Partner**
**Maximilianstrasse 58**
**W-8000 München 22 (DE)**

EP 0 286 714 B1

PATENT ABSTRACTS OF JAPAN, vol. 11, no. 259 (C-441)[2706], 21st August 1987; & JP - A - 62 61608 (FUJI ELECTRIC CO LTD) 18-03-1987

PATENT ABSTRACTS OF JAPAN, vol. 9, no. 138 (C-286)[1861], 13th June 1985; & JP - A - 60 25597 (FUJI DENKI SOUGOU KENKYUSHO K.K.) 08-02-1985

## Description

BACKGROUND OF THE INVENTION

The present invention relates to an electroosmotic dewaterer for continuously extracting water from a substance to be dehydrated, including surplus liquid mud produced in sewage disposal plants and mud slurries produced in the fields of food and other industries, by the use of electroosmotic effect and pressure.

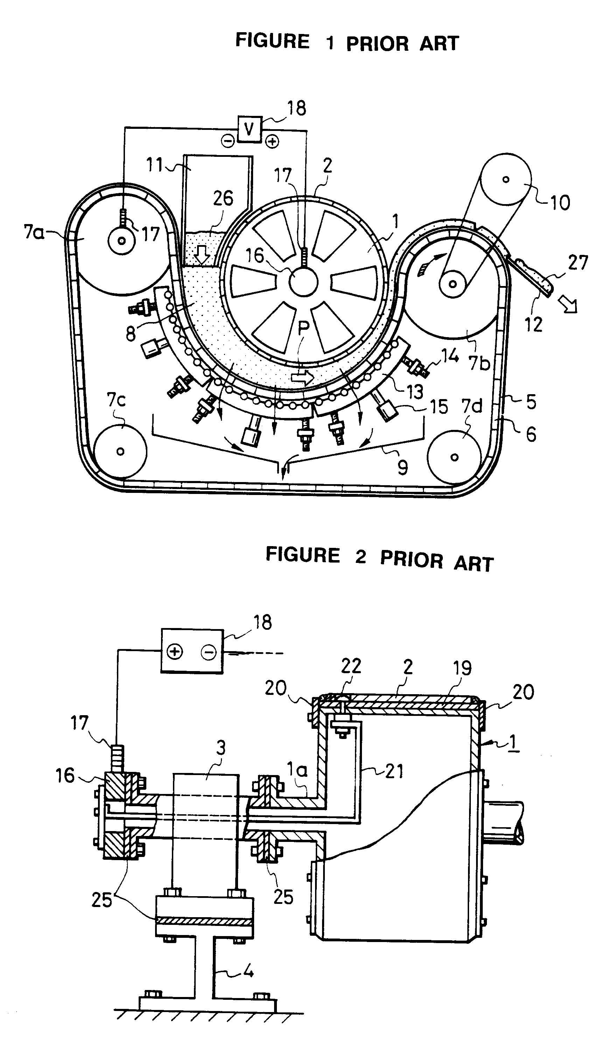

Various types of conventional electroosmotic dewaterer are disclosed in JP-A-85 25597 Referring to Fig. 1 through 3, a description will be given to the schematic construction of an electroosmotic dewaterer of conventional rotary drum type and continuous process type. As shown in Fig. 1, a rotary drum 1 is provided with an anode electrode 2 made of high electrolytic corrosion resistant material and bonded to the outer peripheral face thereof. The drum shaft 1a of the rotary drum 1 is pivotally supported by a frame 4 shown in Fig. 2 via a bearing 3 as shown in Fig. 2. An endless filter belt 5 and a metal caterpillar-like press conveyor 6 used as a cathode electrode and superposed on the filter belt 5 is stretched on sprockets 7a~7d opposite to a part of peripheral area of the rotary drum 1. A liquid mud compression passage 8, whose gap between the electrodes gradually decreases from entrance toward exit, is provided between the filter belt 5 and rotary drum 1. Further, a filtered water receiving saucer 9 communicating with a discharge channel outside the system is installed via the filter belt 5 and the press conveyor 6 under the liquid mud compression passage 8.

A driving motor 10 is interlockingly coupled to the sprocket 7b and a liquid mud supply hopper 11 is arranged at the entrance of the liquid mud compression passage 8, whereas a scraper 12 for peeling and recovering the dehydrated mud cake is set opposite to the filter belt 5 at the exit thereof. Further, presses 13, together with press position adjusting bolts 14 and hydraulic cylinders 15, are installed along the peripheral face of the press conveyor 6 at the back of the liquid mud compression passage 8.

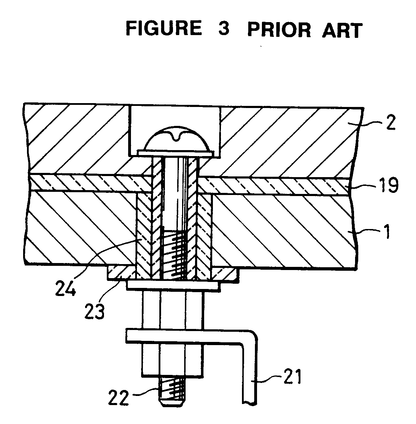

On the other hand, a d.c. power supply 18 is connected via a power supply brush 17 to a power supply slip ring 16 attached to the shaft end 1a of the rotary drum 1 and to a slip ring installed at the supporting shaft of the sprocket 7a being contact with the press conveyor 6 of a cathode electrode. In this case, the anode electrode 2 arranged on the periphery of the rotary drum 1 is provided with the following insulating construction so as to be supplied with power from the power supply 18. As shown in Figs. 2 and 3, the anode electrode 2 is installed via an insulating material 19 on the periphery of the rotary drum 1 and both edges thereof are fixed to the rotary drum 1 by end plates 20 of fiber reinforced plastics. Further, a bus bar 21 led from the slip ring 16 provided at the shaft end via the hollow drum shaft 1a into the rotary drum 1 is connected via a connecting bolt 22 passed through the rotary drum 1 to the electrode 2. In order to insulate the connecting bolt 22 relative to the rotary drum 1, the connecting bolt 22 is provided with an insulating washer 23 and sleeve 24. The drum shaft 1a of the rotary drum 1 is divided in the axial direction to back up the insulation thereof and insulating materials 25 are held between flanges attached to the shaft thus divided, between the drum shaft and the slip ring 16 and between the bearing 3 and the frame 4 installed on the ground side, respectively. The insulating materials 25 are insulated and bolted in the same manner as what is shown in Fig. 3. Such power supply system to the anode electrode and particularly a power supply construction toward the anode electrode attached to the rotary drum is also disclosed in JP-A-81 60604 and is well known.

With the aforesaid arrangement, when liquid mud 26 as a substance to be dehydrated is supplied via the hopper 11 into the liquid mud compression passage 8 while the driving motor 10 is operated and the d.c. voltage is applied by the power supply 18 to the anode and cathode electrodes, the liquid mud is carried toward the exit of the liquid mud compression passage, i.e., in the direction of arrow P while being sandwiched by the rotary drum 1 and the filter belt 5. During the carrying step, electroosmotic action, in addition to mechanical compressive force, is applied by the electric field formed between the facing electrodes to the liquid mud 26 being carried. The slurry particles of the liquid mud 26 are forced by the electroosmotic action to move to the anode side, whereas the water included in the liquid mud 26 is positively charged, caused to flow toward the cathode side and discharged thereat, then by the aforesaid mechanical compressive force in addition to the electroosmotic action, the water passes through the filter belt 5 and is brought down via the discharge channel formed in the press conveyor 6 to the filtered water receiving saucer 9 and discharged therefrom. On the other hand, the liquid mud 26 thus dehydrated in the passage 8 is converted into a cake containing a low percentage of water and the cake 27 thus dehydrated is discharged via the scraper 12 from the exit of the passage 8 and burned or reutilized as a composite fertilizer.

The following problems arise when the electroosmotic dewaterer thus constructed is operated to dehydrate sewage mud and the like.

When the aforesaid electroosmotic dewaterer was used to dehydrate mud produced in a sewage plant, white solid substances were deposited on the surface of the press conveyor of cathode electrode as the operating time lapses and those substances were seen to have accumulated in the form of a layer. As the quantity of the solid substances thus accumulated increased, the power consumption of the electroosmotic dewaterer increased and the discharge channel of the press conveyor was also clogged with the deposits, thus preventing the smooth flow of the filtered water. In consequence, it was confirmed that the dehydration efficiency was reduced to a considerable extent.

The present inventors therefore collected the white deposits and made a quantitative analysis of them using an X-ray analyzer. The table 1 below shows the results of the quantitative analysis.

## Table 1

| Components | Quantity (weight %) | Components | Quantity (weight %) |
|---|---|---|---|
| Ca | ++++ | Zr | tr ~ ± |
| K | ++ | Sr | ± ~ + |
| Cl | + ~ ++ | Zn | tr ~ ± |
| Si | ++ ~ +++ | Cr | tr ~ ± |
| Al | + | Ni | tr |
| S | ++ | Fe | ± ~ + |
| P | ++ | Mn | ± ~ + |
| Mg | ++ ~ +++ | Cr | tr |
| Na | tr | | |

where the weight % of the standard quantity in the above table is:

+ + + +    more than 10;
+ + +      1 ~ 10;
+ +        0.1 ~ 1;
+           0.01 ~ 0.1;
±           0.001 ~ 0.01; and
tr          less than 0.001.

In the X-ray diffraction analysis of the deposits, the calcium content as the largest one in the above table was proved to be calcium hydroxide. The reason for the production of calcium hydroxide during the electroosmotic is assumed to be the following; namely, the liquid mud in the sewage contains a number of calcium ions, which are positively charged cations and, when the liquid mud is electroosmotically dehydrated, the calcium ions together with the water contained in the mud are led to the cathode side, whereby the calcium hydroxide is produced in accordance with the reaction expressed by the following equation and attached to the surface of the cathode electrode:

$$Ca^+ + 2e \rightarrow Ca, \quad Ca + 2H_2O \rightarrow Ca(OH)_2 + H_2$$

Moreover, the calcium hydroxide is, as is well known, electrically nonconductive and such a substance

4

accumulated and attached to the surface of the cathode electrode increases the resistance of the electrode and power loss when the voltage is applied thereto and thus causes the electrode to produce a large amount of Joule heat.

In the meantime, the speeds at which the solid substances attach to the electrode and the electric resistance of the electrode increases, were examined on the basis of the results obtained from the test machine and the present inventors observed:

speed at which the solid substance attached to the electrode $= 0.01g/AH\cdot dm^2$; and speed at which the electric resistance increased $= 0.04\Omega /AH\cdot dm^2$. In the process of electroosmotical dehydration of mud, voltage is applied across the anode and cathode electrodes so that a current having a density ranging from 3 to $6A/dm^2$ is normally caused to flow therebetween. Accordingly, the quantity of substances produced and attached to the surface of the press conveyor as a cathode electrode and that of increased electric resistance per unit time when the electroosmotic dewaterer is operated to dehydrate the sewage mud, can be obtained by multiplying the current density by the speeds at which the solid substance attaches thereto and at which the electric resistance increases. The values thus obtained by way of trial are:     Quantity of substances attached $= 0.3 \sim 0.6g/dm^2$

Quantity of increased electric resistance $= 0.12 \sim 0.24 \ \Omega/dm^2$

Further, the following problems as to the maintenance of insulation of an electrical path to the anode arise during the operation of the electroosmotic dewaterer thus constructed.

When the aforesaid electroosmotic dewaterer is started, a large quantity of Joule heat is generated as the liquid mud is supplied with power so that a large quantity of steam is produced from the heated liquid mud and is spread in the surroundings. Because of this, in the conventional power supply construction relative to the anode electrode 2 permits the steam to enter into the small gap between the insulating materials installed in each of the principal places and condense therein, so that defective insulation occurs between the electrode 2 and the rotary drum 1 or the rotary drum 1 and the frame 4. Moreover, because $3\sim5 \ kg/cm^2$ pressure is applied to the liquid mud in the passage 8 during the operation of the dewaterer, the reaction force of the compression force is applied to the rotary drum 1 as a bending stress. For the above reason, the drum shaft may be bent and the insulating material inserted in between the flanges of the divided shafts may often be damaged and, when the insulating material is thus damaged, the steam is facilitated to enter into the small gap therebetween. In consequence, the defective insulation is often caused during the operation of the conventional electroosmotic dewaterer, whereby power often leaks from the anode via the rotary drum, the frame and the like to the ground, so that the trouble of the loss of electroosmotic dewaterer function often occurs. In order to avoid the operating trouble of the dewaterer due to the defective insulation, the dewaterer should be subject to frequent checks for insulation and, when a defective insulation point is found, the defective insulation point should be remedied correctly each time it is found. Thus, the management of dewaterer operation is troublesome.

On the other hand, a measure to prevent the generation of the defective insulation has once been taken by completely covering the gap between the insulating points with resin. However, the increased size of the machinery limits the application of the aforesaid method and the only method has been to coat the insulating points with resin. According to the resin coating method, the layer of resin is thin and to completely cover the gap with the layer of resin is difficult so that sufficient reliability can not be attained.

Still further, the following problems as to the anode electrode arise. The anode electrode 2 of the rotary drum for use in the aforesaid electroosmotic dewaterer has conventionally been made of stainless steel, nickel steel or soft-iron in the form of a plate, or carbon-sintered plate. According to the facts known to the present inventors through the operation of such an electroosmotic dewaterer, the anode electrode made of the aforesaid materials has the following disadvantages: namely, the electrode made of stainless, nickel steel or soft-iron allows its component to ionize because of the current flowing and to melt into the liquid mud so that the electrode is consumed as time elapses. The value of the consumption per unit time under a current supply condition of $1A/dm^2$ in the case of stainless steel (SUS 304) is 156mg/A-Hr and as great as 1,050mg/A-Hr in the case of the nickel steel. Furthermore, the life of the electrode is shortened because a current of about $3A/dm^2$ practically passes through such an electroosmotic dewaterer. Moreover, the electrode made of stainless steel, nickel steel or the like may cause a secondary pollution because the heavy metal ions melted out of the electrode supplied with current are mixed into the substance to be dehydrated or the filtered water. In addition, the soft-iron plate may be oxidized during the use and oxidized iron is formed in layers on the electrode, which extremely decreases conductivity thereof. When precious metals such as platinum are used for the anode electrode, the consumption of the electrode is small and excellent conductivity is attained, however, such metals are expensive and cannot be put to practical use economically. On the other hand, the carbonsintered plate has a feature that its consumption due to the flow of current is 47.6mg/A-Hr under the same condition, which is considerably smaller than that of the aforesaid metal electrode. However, its electrical resistivity is large so that current flow property is low. Also, its mechanical strength and wear resistance are low so that cracks may be produced because of the compressive load applied to the electrode in use, and the wear thereof resulting from its contact with the substance to be dehydrated may be accelerated.

If the facing electrodes are worn out during the operation of the electroosmotic dewaterer, the distance therebetween slightly changes and this fact makes it necessary to alter the voltage supply condition of the power supply and to adjust the distance therebetween to maintain efficient operation of the dewaterer. In order to cope with the aforesaid situation, the worn out electrodes must be replaced with new ones in a relatively brief period with interruption of the operation thereof. The resulting trouble of replacing the electrode and the time required therefor have reduced the operating efficiency of the dewaterer. The properties of the electrode, particularly the durability thereof form an important part in maintaining the performance of the dewaterer and, in view of this, the selection and improvement of materials constituting the electrode is an important problem.

## SUMMARY OF THE INVENTION

The present invention is intended to solve the aforesaid problems inherent in the prior art.

An object of the invention is to provide an electroosmotic dewaterer capable of maintaining not only current flow property but also the filtered water discharging function by removing substances produced and attached to the surface of a cathode electrode during the operation of the dewaterer.

Another object of the invention is to provide a stable, reliable electroosmotic dewaterer with particularly a power supply mechanism to the anode electrode in which power leakage to the ground during the operation of the dewaterer is effectively prevented.

In order to achieve these objects, the electroosmotic dewaterer according to the present invention is equipped with means for removing the substances produced and attached onto the surface of the cathode electrode during the operation of the dewaterer.

With the aforesaid arrangement, the means for removing the solid substances thus attached includes a brush type scraper for mechanically removing the deposits formed on the surface of the cathode electrode, a high-pressure water rinsing apparatus, an ultrasonic rinsing apparatus and a chemical rinsing apparatus, which are operated during the operation of the dewaterer when necessary, so that the solid deposits on the surface of the cathode electrode are removed. Consequently, the cathode electrode is usable in a clean surface state while almost no substances are attached thereto and thereby the electroosmotic dewaterer can be operated always with a high dehydration ratio.

Further, in the electroosmotic dewaterer in accordance with the present invention, the anode electrode is attached via the insulating material to the peripheral face of the rotary body and voltage is supplied by a power supply via a power supply mechanism to the outer surface of the anode electrode.

With the aforesaid arrangement, the power supply mechanism is a brush, roller, or shoe type power supply mechanism, for instance, arranged opposite to the outer periphery of the anode electrode, and the voltage supplied via the power supply mechanism by the power supply is directly applied to the outer surface of the anode electrode opposite to the rotary body. Accordingly, there are no connecting bolts necessary in the conventional supply mechanism, which inwardly passes through the rotary body and is connected to the anode electrode, and also there are no gaps across the insulating material of the connecting bolt which allows the steam to penetrate. Consequently, there arises no electrical leakage between the electrode and the rotary body due to the steam generated from the liquid mud during the operation of the dewaterer, so that safety from leakage can be improved considerably. Further, the slip ring and insulating material between the rotary body and the frame in the conventional construction can be dispensed with.

In a preferred embodiment of the present invention, the anode electrode according to the present invention is a composite one comprising a metal valve plate of titanium, tantalum and the like as an electrode base and a coating layer of platinum metal such as palladium, tellurium, rhodium and platinum or what contains at least one kind of platinum oxide offering excellent corrosion resistance and conductivity on the electrode base, so that the electrode base of the metal plate may provide the structure, strength and conducting function as an electrode material.

Further, since the layer of platinum metal or what contains a platinum oxide is used as the electrode interface performing the basic function, the anode electrode offering great electrochemical and mechanical durability required for the properties of the electrode for an electroosmotic dewaterer is obtainable economically.

6

The composite electrode is prepared by bending the metal valve plate, forming the plate into desired electrode segments to provide the electrode base, applying a liquid with platinum chloride dissolved in alcohol or platinum oxide powder dispersed in alcohol to the surface of the electrode base, pyrolyzing the liquid by drying and heating after drying; or otherwise the electrode is prepared by electroplating the surface thereof with platinum metal.

## BRIEF DESCRIPTION OF THE DRAWINGS

Fig. 1 is a block diagram of a conventional electroosmotic dewaterer,

Fig. 2 is a sectional view of the rotary drum of Fig. 1,

Fig. 3 is a partially enlarged sectional view of the power supply structure to the anode electrode of Fig. 2,

Fig. 4 is a diagram of a rotary drum type electroosmotic dewaterer embodying the present invention,

Fig. 5 is a perspective view of a brush type scraper exemplified as means for removing the deposits of Fig. 4,

Fig. 6, 7 and 8 are concrete block diagrams illustrating the power supply mechanism on the anode electrode of Fig. 4, respectively,

Fig. 9 is a top view of an electrode segment of an anode electrode embodying the present invention,

Fig. 10 is a sectional view taken along the line II~II of Fig. 9,

## DETAILED DESCRIPTION OF THE PREFERRED EMBODIMENTS

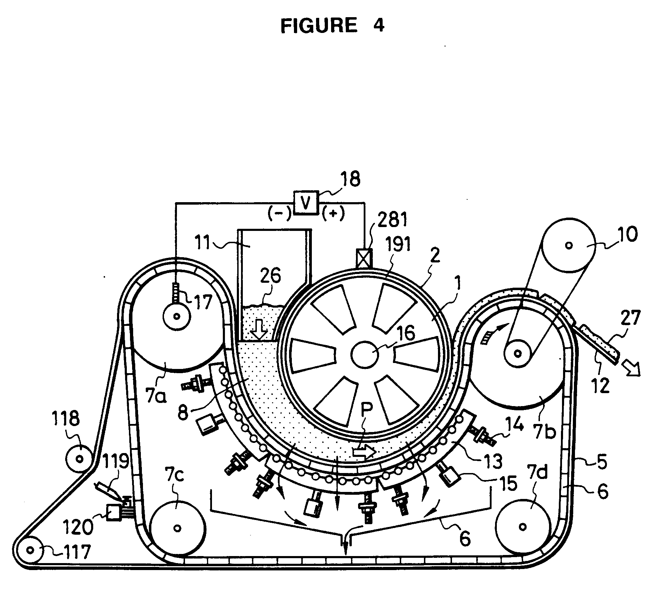

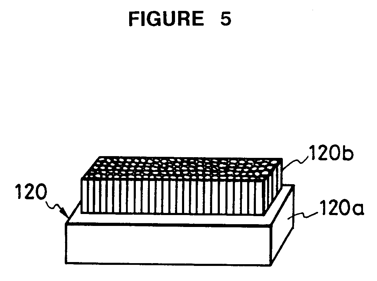

Fig. 4 is a block diagram of an electroosmotic dewaterer embodying the present invention and Fig. 5 shows a brush type scraper arranged opposite to a cathode electrode as means for removing deposits, wherein like reference characters as those of Fig. 1 denote like parts. More specifically, the basic construction of the electroosmotic dewaterer is identical with what is shown in Fig. 1, whereas a filter belt 5 is set longer than a press conveyor 6. The filter belt 5 is stretched on auxiliary pulleys 117, 118 so that it is separated from the press conveyor 6 at a portion of its peripheral moving route, where a high-pressure jetting nozzle 119 and a brush type scraper 120 are installed opposite to the surface of the press conveyor 6, i.e., that of the electrode facing the mud. In this case, the high-pressure jetting nozzle 119 is installed so that a jet of high-pressure water is sent to the surface of the press conveyor 6, whereas the brush type scraper 120 is formed of, as shown in Fig. 5, a bundle of stainless wires 120b planted on a base 120a and made to abut against the surface of the press conveyor 6.

With that arrangement, white solid deposits containing a large quantity of calcium hydroxide are formed and attached to the surface of the press conveyor 6 of a cathode electrode while the electroosmotic dewaterer is being operated. However, the deposits are scraped off by the brush type scraper 120 as the press conveyor 6 turns and removed by the jet of high-pressure rinsing water. Accordingly, the press conveyor 6 free from the deposits is moved to the liquid mud compression passage 8 again and involved in the electroosmotic action as a cathode electrode. In the liquid mud compression passage 8 where the electroosmotic action takes place, the press conveyor 6 is allowed to maintain a conducting function as a cathode electrode in a clean state and simultaneously capable of letting the water filtered through the filter belt 5 be discharged into a filtered water receiving saucer 9 smoothly.

As means for removing the deposits, a rinsing tank filled with a rinsing liquid such as a water or a chemical agent and equipped with an ultrasonic wave transmitter, other than the brush type scraper and high-pressure water jetting nozzle as shown in the drawing, may be installed on the periphery of the press conveyor 6 so as to remove the deposits on the press conveyor or electrode passed through the rinsing tank by means of the action of ultrasonic cavitation. Otherwise, a rinsing tank filled with a chemical agent such as hydrochloric acid about 10 times diluted may be installed on the periphery of the press conveyor 6, for instance, so as to dissolve and remove the deposits, particularly calcium hydroxide as the principal content contained therein, on the electrode by letting the press conveyor pass through the rinsing tank.

Although an application of the present invention to a pressure-drum type electroosmotic dewaterer has been described in the above embodiment, the present invention is applicable to a belt press type electroosmotic dewaterer using an endless press belt superimposed on the insulating material as the anode electrode, instead of the rotary drum as illustrated in the aforesaid embodiment.

Another feature in the construction of the electroosmotic dewaterer different to that shown in Fig. 1 is that the anode electrode 2 is bonded via an insulating material 191 to the outer periphery of a rotary drum 1 of a rotary body and a power supply mechanism 281 is arranged opposite to the outer periphery of the electrode 2 in the opposite area of a liquid mud compression passage 8 so as to supply voltage from a d.c.

power supply 18 via the power supply mechanism 281 to the electrode 2.

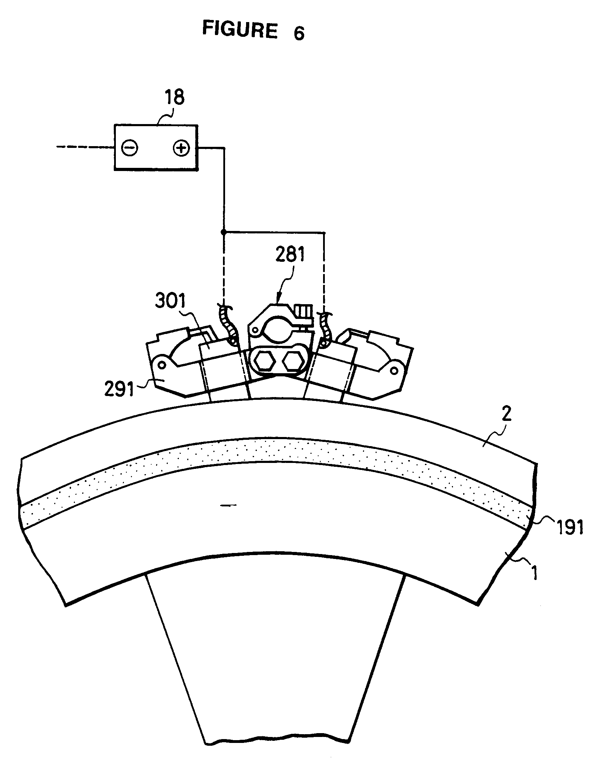

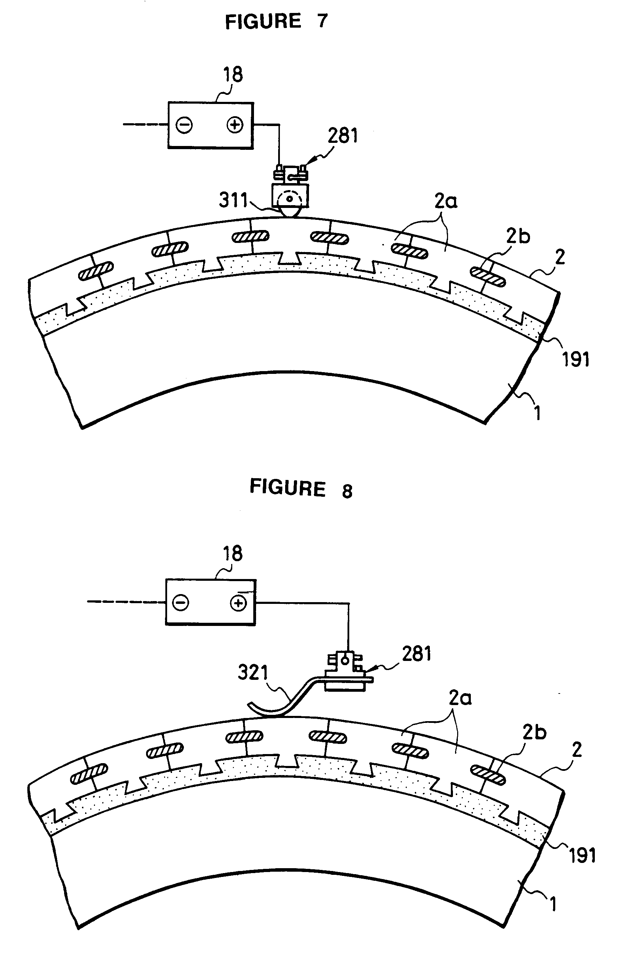

Several embodiments of the power supply mechanisms 281 will be shown by reference to Figs. 6, 7 and 8. Fig. 6 shows a brush type power supply mechanism wherein a carbon brush 301 held by a brush holder 291 is abutting against the anode electrode 2 and is connected via a lead wire to the power supply 18, the brush holder 291 being held via an insulating supporting shaft to the frame. Fig. 7 shows a roller type power supply mechanism wherein a current collecting roller 311 connected to the power supply 18 is arranged so that it abuts against the outer peripheral surface of the anode electrode 2. In this embodiment, a number of segments 2a disposed on the peripheral surface of the rotary drum 1 constitute the anode electrode 2 and each segment 2a is coupled via a dovetail to an insulating material 191 and electrically connected via a crossover lead 2b to an adjacent one. The electrode 2 is thus divided into segments 2a so that any one of them corroded or worn out may be replaced on a segment basis. Fig. 8 shows an example of a shoe type power supply mechanism instead of the employment of a roller of Fig. 7, wherein a shoe 321 of resilient metal made of copper-beryllium alloy is arranged so as to slide on the electrode surface.

In the power supply mechanism thus constructed, the voltage supplied by the power supply 18 is applied via the power supply mechanism 281 to the anode electrode 2. The electrode 2 is completely separated via the insulating material 191 from the rotary drum 1 over the whole peripheral area of the electrode 2 and, contrary to the prior art as shown in Fig. 3, defective insulation due to the entrance of steam into a gap does not occur. The insulation between the electrode 2 and the rotary drum 1 is thus maintained. It is also possible to omit an insulation backup means provided, as shown in Fig. 2, between the rotary drum 1 and the grounded frame 4 by dividing the drum shaft and so on. That is, the electroosmotic dewaterer can be simplified in construction.

Each of the power supply mechanisms to the anode illustrated above may be installed opposite to the side edge of the electrode 2 and used to directly supply power. As another application of the invention, a waterproof insulated lead drawn from the electrode 2 may be made to creep about the side of the rotary drum 1 and connected to a slip ring installed on the drum shaft, and the power supply mechanism 281 is installed opposite to the slip ring.

As mentioned above, although Fig. 4 illustrates a rotary drum type electroosmotic dewaterer, the present invention is also applicable to a belt press type electroosmotic dewaterer.

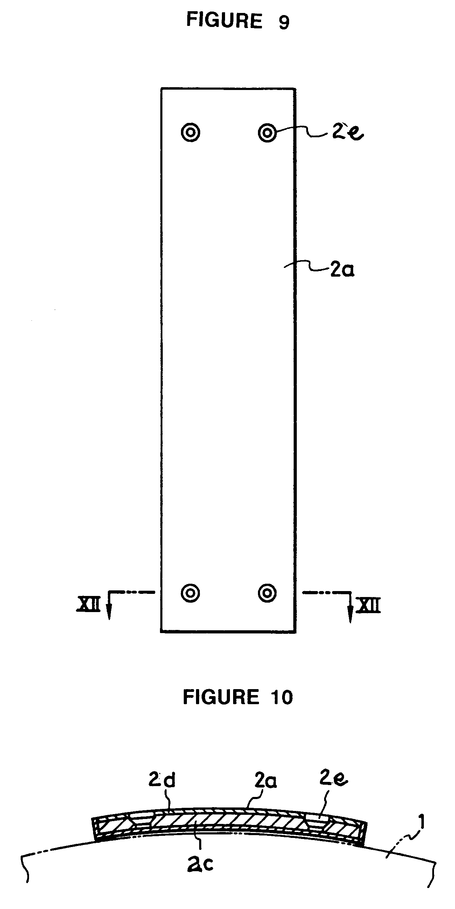

Figs. 9 and 10 show a segment of an anode electrode embodying the present invention. The electrode segment 2a is mounted on the periphery of a rotary drum 1 as an anode electrode for an electroosmotic dewaterer and formed of a sliplike plate arcuate in cross section. Bolts are fitted into bolt holes 2e bored at four corners of the plate and the electrode segments are arranged in a row on the periphery of the rotary drum 1 and fixed with the bolts.

Each electrode segment 2a is formed by bending a sliplike plate prepared from metal valve material such as titanium steel in an arcuate shape which conforms to the peripheral face of the rotary drum 1 and covering the metal valve plate thus formed into an electrode base 2c with a coating layer 2d of platinum metal including palladium, tellurium, rhodium or what contains at least one kind of platinum oxide, so that the composite electrode is formed. The method of coating the layer 2d comprises electroplating the surface of the electrode base 2c made of titanium steel using a diamino nitrous acid, platinum chloride acid, platinum chloride acid ammonium bath, or applying a liquid with platinum metal chloride dissolved in alcohol or fine powder of platinum metal oxide dispersed in water or alcohol to the surface thereof, drying the liquid, burning the electrode base in a heating oven at about 500°C to deposit the platinum metal or platinum metal oxide to form the coating layer 2d. When the coating layer 2d of the electrode segment 2a is worn out because of the long use of the anode electrode, the electrode segment 2a is removed from the rotary drum and caused to undergo the aforesaid process of forming the coating layer 2d on the surface thereof again to regenerate the electrode.

A description will subsequently be given of the results of experiments made by the present inventors on the wear characteristics of electrodes for the electroosmotic dewaterer energized with power as compared with those of electrodes prepared from other materials.

Table 2 indicates the wear characteristics of each specimen obtained from the experiments for electroosmotic dehydration. Components of the materials used to prepare various electrodes in the above experiments are as follows for every specimen. Numeral accompanied with the component of each specimen represents weight%.

Specimen 1: stainless steel SUS 304 (Fe 70, Cr 19.5, Ni 10, C 0.08);

Specimen 2: stainless steel SUS 430 (Fe 82, Cr 18);

Specimen 3: nickel (Ni 100);

Specimen 4: titanium (Ti 100);

Specimen 5: Inconel 600 (Ni 76, Cr 16, Fe 7.2, Mn 0.2, Si 0.2, Cu 0.1);

Specimen 6: Incolloy 800 (Ni 32, Fe 46, Cr 20.6, Si 0.35, Cu 0.27, C 0.04); and

Specimen 7: composite material composed of titanium steel as basic material coated with iridium oxide and platinum.

The specimen 7 is a composite material having a coating layer of iridium oxide and platinum on the base of titanium steel and made through the process of applying, to a base of titanium steel with its surface chemically etched, a liquid of platinum acid chloride dissolved in butanol and further fine powder of iridium oxide uniformly dispersed therein (liquid A), burning the product in the atmosphere of air at about 500°C, applying a liquid of platinum acid chloride dissolved in butanol (liquid B) thereto, and burning it in the atmosphere of air at about 500°C, the aforesaid process being repeated four times.

## Table 2

| Specimen | Testing Time (Hr) | Current density (A/dm$^2$) | Reduced quantity of weight (mg/A-Hr-dm$^2$) | Reduced quantity of thickness (mm/A year) |
|---|---|---|---|---|
| 1 | 7.25 | 1.09 | 156 | 17.3 |
| 2 | 32.6 | 2.27 | 943 | 105 |
| 3 | 7.25 | 1.09 | 1,050 | 103 |
| 4 | 21.2 | 1.91 | 1,080 | 210 |
| 5 | 50.6 | 2.16 | 625 | 68.3 |
| 6 | 15.8 | 2.27 | 709 | 77.6 |
| 7 | 30.0 | 3.19 | 0.002 | 0.00001 |

As is obvious from the results of experiments of Table 2, specimen 7 of the composite material prepared from titanium steel plate coated with iridium oxide and platinum showed an extremely small decreased weight quantity compared with the remaining specimens 1-6 and offered high electrochemical corrosion resistance. In this case, the iridium oxide and platinum corresponding to the small decreased weight quantity are liquated from the electrode and mixed with the substance to be treated and the filtered water. However, that quantity is extremely small and even smaller than what is normally present in the natural world, whereby the secondary environment pollution resulting from the operation of the electroosmotic dewaterer is almost nearly negligible.

Further, in order to confirm the practicality of the anode electrode formed of the composite material of the specimen 7, the present inventors actually tested the electrode segments 2a, as shown in Fig. 9, manufactured by coating the iridium oxide and platinum with the base plate of titanium steel on the peripheral face of the rotary drum 1 for the electroosmotic dewaterer of Fig. 1. The dimensions of the rotary drum for the electroosmotic dewaterer used in the testing were 69 cm in diameter, 26 cm in width and the test operating conditions included the 20% concentration of liquid mud as a substance to be treated, 120A supply current from the power supply and dehydrating time of 180 hours.

The electroosmotic dehydration testing under the aforesaid conditions resulted in the dehydration of the liquid mud up to a water percentage of 60~65%. When the electrode segments on the anode side were removed from the rotary drum after the testing and were examined, no external mechanical damage was observed and, according to the results of X-ray analysis, the worn out quantity of the electrode was only 30 mg for the total electrode segments mounted on the rotary drum. On the other hand, the total peripheral surface area of the rotary drum was 56 dm$^2$ and the dehydrating area opposite to the cathode electrode is less than half the total surface area, namely, 25 dm$^2$ or less. Accordingly, the mean current density is 120A/25 dm$^2$ = 6.0A/dm$^2$. Moreover, the effective time during which each electrode segment was involved

9

actually in electroosmotic dehydration was the one during which the electrode passed through the liquid mud passage as the rotary drum turned. Consequently, the effective usable time of the anode electrode against the dewaterer operating time of 180 hours is

(dehydrating area/total surface area of electrode) x operating time = (25 dm$^2$/56 dm$^2$) x 180 Hr = 80.4 Hr. The decreased weight quantity of the anode electrode per unit supply current and unit operating time becomes 30 mg/120A x 80.4 Hr = 3.1 x 10$^{-3}$mg/A-Hr-dm$^2$ from the aforesaid total worn out weight quantity 30 mg, the supply current 120A and the effective usable time 80.4 Hr. Although the value thus calculated is slightly greater than the result of the experiment of Table 2, this appears due to the difference between batch and continuous treating systems.

On the other hand, based on the worn out quantity 30 mg of the electrode under the dewaterer operating conditions and the mean specific gravity 22 g/cm$^3$ of iridium oxide and platinum, and assuming the dewaterer was continuously operated throughout the year, the decreased thickness quantity of each electrode segment was computed. The decreased thickness quantity was as small as 2.7 x 10$^{-6}$ mm/year. Moreover, if the decreased thickness quantity of the anode electrode continuously operated throughout the year is such a value, the space between the opposite electrodes is only slightly expanded and it is therefore possible to maintain the high performance of the electroosmotic dewaterer throughout the year without changing the power supply conditions, readjusting the gap of the liquid mud passage and replacing the anode segment during the operating period.

The aforesaid decreased thickness quantity of the electrode is one which is obtained under condition that the supply current density is 6.0A/dm$^2$ and, if the dewaterer is operated with a current density lower than the above value, the anode electrode is prevented from wearing to a greater extent and the decreased thickness quantity is made smaller, whereby the life of the electrode is prolonged.

As described above, an electroosmotic dewaterer according to the present invention is equipped with means for removing the deposits formed and attached onto the surface of the cathode electrode during the dehydrating operation. Accordingly, it becomes possible to operate the electroosmotic dewaterer at high dehydrating efficiency by keeping the surface of the cathode electrode clean by removing the deposits formed thereon during the operation and preventing an increase in needless power loss and reduction in filtered water discharging function.

Further, according to the present invention, the anode electrode is mounted via an insulating material on the peripheral face of the rotary body and voltage is applied via a power supply mechanism by the power supply to the outer peripheral face thereof. Consequently, no power supply connecting bolts passing through the rotary body as in the case of the conventional machine are required and, even if the electroosmotic dewaterer according to the present invention is exposed to steam during the operation thereof, failure of insulation and leakage of power attributed thereto can be prevented without fail. In addition, the insulating construction with respect to the power supply passage toward the anode electrode can be made simpler than the conventional construction. Also, the effect of the present invention includes improvement in safety and reliability to a large extent.

Still further, according to a preferred embodiment of the present invention in the arrangement of the anode electrode, the following effects are achieved:

(1) The liquating quantity of the electrode due to the current flow is small and therefore the performance of the electroosmotic dewaterer can be maintained without replacing the worn out electrode and it can be operated continously for a long period of time with reliability and at a high operation rate.

(2) The liquating quantity during the operation of the electroosmotic dewaterer is so small as to be negligible and the liquated component is harmless, so that almost nearly no secondary environmental pollution is caused even though the liquated component is mixed with the substance to be dehydrated and the filtered water.

(3) The excellent mechanical strength and wear resistance allows the electrode to sufficiently withstand the liquid mud compression load applied during the dehydrating operation.

(4) The valve metal as an electrode base is light in weight, high in mechanical strength, and easy in bending operation and cutting operation in addition to the conducting function, so that the manufacture of electrodes having a large area is easy.

(5) It is only necessary to coating the surface of the electrode base of valve metal with platinum metal or platinum oxide to a minimum extent required for the formation of a thin film serving as an electrochemical interface and the coating layer can readily be formed by electroplating or pyrolysis, so that the electrode manufacture is less costly. Moreover, even if the coating layer of the electrode is worn out during a long operation, the coating layer can be regenerated through the aforesaid process and reused.

In other words, the anode electrode of the present invention is capable of meeting electrical and mechanical properties required for electrodes of the electroosmotic dewaterer, so that it is durable and has excellent practical values.

**Claims**

1. An electroosmotic dewaterer for dehydrating a liquid substance, where said substance is liquid mud, comprising:
   facing anode and cathode electrodes (2,6) having a passage therebetween for receiving said liquid substance;
   power supply means (18) for applying a d.c. voltage across said electrodes so as to move the water contained in said liquid mud to said cathode electrode by means of electroosmotic action;
   a rotary body (1) revolving so as to transport said liquid mud through said passage;
   an insulation member (191) provided on the periphery of said rotary body with said anode electrode arranged on said rotary body through said insulation member;
   a filter medium (5) through which said liquid is filtered, **characterised in** that said cathode electrode is equipped with removal means (119,120) for removing a deposit formed on the surface of said cathode electrode during the dehydrating operation; and means are provided (281) for applying said d.c. voltage from said power supply means to the outer surface of said anode electrode arranged on said rotary body.

2. An electroosmotic dewaterer as claimed in claim 1, wherein said means for removing mineral deposits includes a brush type scraper abutting the surface of said cathode electrode for mechanically removing said mineral deposits.

3. An electroosmotic dewaterer as claimed in claim 1, wherein said means for removing the deposit is a high-pressure water rinser for removing the deposit by sending a jet of pressurized water to the surface of said electrode.

4. An electroosmotic dewaterer as claimed in claim 1, wherein said means for removing the deposit is an ultrasonic rinser for removing the deposit by means of the action of ultrasonic wave cavitation.

5. An electroosmotic dewaterer as claimed in claim 1, wherein said means for removing the deposit is a chemical rinser for dissolving and removing the deposit by chemical agents.

6. An electroosmotic dewaterer as claimed in claim 1 wherein said rotary body is a rotary drum attached to said anode electrode via said insulation member which electrically insulates and completely physically isolates said anode from said rotary drum.

7. An electroossmotic dewaterer as claimed in claim 1 wherein said rotary body comprises an endless press belt stretched on sprockets, said endless belt being simultaeously used as said anode electrode (2) whereby said belt is superimposed on said insulating material before being stretched on said sprockets.

8. An electroosmotic dewaterer as claimed in claims 6 and 7, wherein said means (281) for applying said d.c. voltage slides on the outer surface of said anode electrode.

9. An electroosmotic dewaterer as claimed in claim 8, wherein said means for applying said d.c. voltage is installed on the periphery of said anode electrode outside the electroosmotic dehydrating area.

10. An electroosmotic dewaterer as claimed in claim 8, wherein said means for applying said d.c. voltage includes a carbon brush (301), roller (311) or shoe type (321) in which the brush, roller or shoe contacts the outer surface of said anode electrode.

11. An electroosmotic dewaterer as claimed in claim 1, wherein said anode electrode is a composite structure comprising a metal valve plate as an electrode base and a coating layer including platinum metal or a platinum metal oxide, said coating layer being formed on said electrode base.

12. An electroosmotic dewaterer as claimed in claim 11, wherein said metal valve plate is made of titanium and said coating layer is made of oxidized iridium and platinum metal.

EP 0 286 714 B1

**Patentansprüche**

1. Ein Elektroosmose-Entwässerer zum Dehydrieren einer flüssigen Substanz, wobei die Substanz flüssiger Schlamm ist, mit:

einander gegenüberliegenden Anoden- und Kathodenelektroden (2, 6), welche einen Durchgang dazwischen für die Aufnahme der flüssigen Substanz aufweisen;

einer Energieversorgungseinrichtung (18) zum Anlegen einer Gleichspannung über den Elektroden, um das in dem flüssigen Schlamm enthaltene Wasser zu der Kathodenelektrode mit Hilfe eines Elektroosmosevorgangs zu bewegen;

einem Drehkörper (1), der sich dreht, um den flüssigen Schlamm durch den Durchgang zu transportieren;

einem Isolierteil (191), welches am Rand des Drehkörpers vorgesehen ist, wobei die Anodenelektrode an dem Drehkörper angebracht über das Isolierteil ist;

einem Filtermedium (5), durch welches die Flüssigkeit gefiltert wird, **dadurch gekennzeichnet**, daß die Kathodenelektrode mit einer Entnahmeeinrichtung (119, 120) zum Entfernen einer auf der Oberfläche der Kathodenelektrode während des Dehydrierungsvorganges gebildeten Ablagerung ausgerüstet ist; und daß eine Einrichtung (281) zum Anlegen der Gelichspannung von der Energieversorgungseinrichtung an die äußere Oberfläche der an dem Drehkörper angebrachten Anodenelektrode vorgesehen ist.

2. Ein Elektroosmose-Entwässerer nach Anspruch 1, wobei die Einrichtung zum Entfernen von Mineralablagerungen ein bürstenartiger Schaber ist, welcher gegen die Oberfläche der Kathodenelektrode zum mechanischen Entfernen der Mineralablagerungen anliegt.

3. Ein Elektroosmose-Entwässerer nach Anspruch 1, wobei die Einrichtung zum Entfernen der Ablagerung ein Hochdruckwasserspüler zum Entfernen der Ablagerung durch Richten eines Druckwasserstrahls auf die Oberfläche der Elektrode ist.

4. Ein Elektroosmose-Entwässerer nach Anspruch 1, wobei die Einrichtung zum Entfernen der Ablagerung ein Ultraschallspüler zum Entfernen der Ablagerung mit Hilfe eines Ultraschallwellenkavitationsvorgangs ist.

5. Ein Elektroosmose-Entwässerer nach Anspruch 1, wobei die Einrichtung zum Entfernen der Ablagerung ein chemischer Spüler zum Auflösen und Entfernen der Ablagerung durch chemische Mittel ist.

6. Ein Elektroosmose-Entwässerer nach Anspruch 1, wobei der Drehkörper eine Drehtrommel ist, welche an der Anodenelektrode über das Isolationsteil, welches die Anode von der Drehtrommel elektrisch und vollständig körperlich isoliert, angebracht ist.

7. Ein Elektroosmose-Entwässerer nach Anspruch 1, wobei der Drehkörper ein endloses auf Kettenräder gespanntes Druckband umfaßt, das endlose Band gleichzeitig als die Anodenelektrode (2) verwendet wird, und wobei das Band dem isolierenden Material überlagert wird, bevor es auf die Kettenräder gespannt wird.

8. Ein Elektroosmose-Entwässerer nach Anspruch 6 und 7, wobei die Einrichtung (281) zum Anlegen der Gleichspannung auf der äußeren Oberfläche der Anodenelektrode gleitet.

9. Ein Elektroosmose-Entwässerer nach Anspruch 8, wobei die Einrichtung zum Anlegen der Gleichspannung am Rand der Anodenelektrode außerhalb des elektroosmotischen Dehydrierungsbereichs installiert ist.

10. Ein Elektroosmose-Entwässerer nach Anspruch 8, wobei die Einrichtung zum Anlegen der Gleichspannung eine Kohlebürste (301), eine Rolle (311) oder einen schuhartigen Kontakt (321) enthält, wobei die Bürste, Rolle oder der Schuh die äußere Oberfläche der Anodenelektrode kontaktiert.

11. Ein Elektroosmose-Entwässerer nach Anspruch 1, wobei die Anodenelektrode eine Verbundstruktur aufweist, welche eine Metallklappenplatte als eine Elektrodenbasis und eine Überzugsschicht, welche Platinmetall oder Platinmetalloxid enthält, umfaßt, wobei die Überzugsschicht auf der Elektrodenbasis

12

EP 0 286 714 B1

gebildet ist.

**12.** Ein Elektroosmose-Entwässerer nach Anspruch 11, wobei die Metallklappenplatte aus Titan hergestellt ist, und die Überzugsschicht aus oxidierten Iridium- oder Platinmetall besteht.

**Revendications**

**1.** Appareil de déshydratation par électro-osmose, destiné à la déshydratation d'une substance liquide qui est une boue liquide, comprenant :

des électrodes anodique et cathodique (2, 6) placées en regard et délimitant un passage entre elles pour la substance liquide,

une alimentation en énergie (18) destinée à appliquer une tension continue entre les électrodes afin que l'eau contenue dans la boue liquide se déplace vers l'électrode cathodique par électro-osmose,

un corps rotatif (1) qui tourne afin qu'il transporte la boue liquide dans le passage,

un organe isolant (191) placé à la périphérie du corps rotatif, l'électrode anodique étant placée sur le corps rotatif avec interposition de l'organe isolant, et

un milieu de filtration (5) à travers lequel le liquide est filtré,

caractérisé en ce que l'électrode cathodique est équipée d'un dispositif d'extraction (119, 120) destiné à retirer un dépôt qui se forme à la surface de l'électrode cathodique pendant l'opération de déshydratation, et un dispositif (281) est destiné à appliquer la tension continue de l'alimentation à la surface externe de l'électrode anodique placée sur le corps rotatif.

**2.** Appareil de déshydratation par électro-osmose selon la revendication 1, dans lequel le dispositif destiné à extraire des dépôts minéraux comprend un racleur de type à balai qui est en butée contre la surface de l'électrode cathodique et qui est destiné à retirer mécaniquement les dépôts minéraux.

**3.** Appareil de déshydratation par électro-osmose selon la revendication 1, dans lequel le dispositif destiné à retirer les dépôts est un organe de rinçage par de l'eau à haute pression destiné à chasser le dépôt par projection d'un jet d'eau sous pression vers la surface de l'électrode.

**4.** Appareil de déshydratation par électro-osmose selon la revendication 1, dans lequel le dispositif destiné à extraire les dépôts est un organe de rinçage ultrasonore destiné à retirer les dépôts sous l'action de la cavitation ultrasonore.

**5.** Appareil de déshydratation par électro-osmose selon la revendication 1, dans lequel le dispositif destiné à extraire les dépôts est un organe de rinçage chimique destiné à dissoudre et retirer les dépôts par l'action d'agents chimiques.

**6.** Appareil de déshydratation par électro-osmose selon la revendication 1, dans lequel le corps rotatif est un tambour rotatif fixé à l'électrode anodique par un organe isolant qui isole électriquement et isole physiquement totalement l'anode du tambour rotatif.

**7.** Appareil de déshydratation par électro-osmose selon la revendication 1, dans lequel le corps rotatif comporte une courroie sans fin de pressage tendue sur des pignons, la courroie sans fin étant utilisée simultanément comme électrode anodique (2), la courroie étant superposée au matériau isolant avant d'être tendue sur les pignons.

**8.** Appareil de déshydratation par électro-osmose selon les revendications 6 et 7, dans lequel un dispositif (281) d'application d'une tension continue glisse à la surface externe de l'électrode anodique.

**9.** Appareil de déshydratation par électro-osmose selon la revendication 8, dans lequel le dispositif d'application de la tension continue est placé à la périphérie de l'électrode anodique, en dehors de la zone de déshydratation par électro-osmose.

**10.** Appareil de déshydratation par électro-osmose selon la revendication 8, dans lequel le dispositif d'application de la tension continue comprend un balai (301) de carbone, un galet (311) ou un patin (321), le balai, le galet ou le patin étant au contact de la surface externe de l'électrode anodique.

13

**11.** Appareil de déshydratation par électro-osmose selon la revendication 1, dans lequel l'électrode anodique a une structure composite comprenant une plaque d'un matériau métallique comme base d'électrode et une couche de revêtement comprenant un métal du groupe du platine ou un oxyde d'un métal du groupe du platine, la couche de revêtement étant formée sur la base d'électrode.

**12.** Appareil de déshydratation par électro-osmose selon la revendication 11, dans lequel la plaque d'un matériau métallique est formée de titane et la couche de revêtement est formée d'un métal du groupe du platine et d'iridium oxydé.

# FIGURE 1 PRIOR ART

# FIGURE 2 PRIOR ART

## FIGURE 3 PRIOR ART

FIGURE 4

FIGURE 5

120b

120

120a

## FIGURE 6

## FIGURE 7

## FIGURE 8

## FIGURE 9

## FIGURE 10